# EUROPEAN PATENT SPECIFICATION

(11) **EP 2 013 031 B1**
(45) Date of publication and mention of the grant of the patent: **28.12.2011**
(21) Application number: 07760852.9
(22) Date of filing: 18.04.2007
(51) Int. Cl.: B41M 1/32, B60C 13/00

(54) **PRODUCTION OF A TIRE WITH PRINTABLE THERMOPLASTIC ORGANIC POLYMER**
HERSTELLUNG EINES REIFENS MIT BEDRUCKBAREM THERMOPLASTISCHEM ORGANISCHEM POLYMER
PRODUCTION D'UN PNEU AVEC UN POLYMERE ORGANIQUE THERMOPLASTIQUE IMPRIMABLE

(30) Priority: 18.04.2006 US 792832 P
(43) Date of publication of application: 14.01.2009
(73) Proprietor: TreadFx, LLC, Clayton, MO 63105 (US)
(72) Inventor: RASKAS, Eric, St. Louis, MO 63130 (US)
(74) Representative: Hutchinson, Glenn Stanley
(86) International application number: PCT/US2007/066882
(87) International publication number: WO 2007/121473

(56) References cited:
- WO-A-2005/113653
- WO-A1-2005/063070
- US-A- 4 861 644
- US-A- 6 114 023
- US-B1- 6 544 634

## Description

### CROSS-REFERENCE TO RELATED APPLICATIONS

This application claims priority to U.S. Provisional Application Serial No. 60/792,832, filed on April 18, 2006.

### TECHNICAL FIELD

This invention relates generally to methods of manufacturing tires having printed images or designs expressed on at least a portion of a sidewall.

### BACKGROUND

Tire manufacturers have historically used a variety of methods to place appliqués or printed images or designs on the sidewall of tires. These appliqués, due to various limitations, have only been available as a design that is incorporated into the mold and expressed on the tire as a protruded or recessed portion of the sidewall. Sidewalls of tires are routinely marked for a variety of reasons among which are identification of the manufacturer and brand of the tire with a distinctive "logo," printed bar code information, each of which is a relatively small laminar piece of rubber applied to the sidewall just before the tire is cured in a mold in a curing press. In contrast, not so routinely marked in such a manner are treads on a cured tire, and when so marked they are typically provided with a plastic or paper bar code label adhesively secured to the tread after the tire is cured, mainly for inventory purposes. These designs have also been limited to alphanumeric or simple geometric shapes and are available only in the color of the molded tire or by using special white ink to make white lettering.

There still remains a need to manufacture an elastomeric material, for example, a pneumatic tire, that has printed designs expressed on any part of the surface of the material. In particular, there remains a need to use material that has desirable properties for printing designs thereon. Such materials include printable thermoplastic organic polymers that can be used during the manufacturing of an elastomeric material. Thermoplastic organic polymers include microporous materials (for example, as described in U.S. Pat. No. 4,861,644) and thermoplastic polyurethanes (TPUs).
US6,544,34 describes placement of a label on an unvulcanised tire.

### SUMMARY OF THE INVENTION

The invention is based, at least in part, on the discovery of methods and materials to place printed images or designs onto tires.
The present invention relates to a method of adding a design to a cured pneumatic tire, as defined in claim 1. Preferred embodiments of the invention are defined in the dependent claims.
The foregoing and other features and advantages of the invention will be apparent from the following more particular description of the embodiments of the invention, as illustrated in the accompanying drawings

### BRIEF DESCRIPTION OF THE DRAWINGS

FIGS. 1A and 1B are flow diagrams illustrating methods for applying a printable microporous material onto an elastomeric material such as, for example, a pneumatic tire.

FIG. 2 is a flow diagram illustrating a method for applying a printable thermoplastic elastomer onto a pneumatic tire.

### DETAILED DESCRIPTION

The invention is based, at least in part, on the use of an appliqué with pneumatic tires. The appliqué includes a material, for example, a substantially water-insoluble thermoplastic organic polymer, for example, a microporous polyolefin or thermoplastic polyurethane, on which an image or design may be printed. The appliqué can then be affixed to the pneumatic tire.

The numbers and kinds of such materials, for example, substantially water-insoluble thermoplastic organic polymers, suitable for use in the methods and products described herein are large. In general, any substantially water-insoluble thermoplastic organic polymer that can be extruded, calendered, pressed, or rolled into film, sheet, strip, or web may be used. The polymer may be a single polymer or it may be a mixture of polymers. The polymers may be homopolymers, copolymers, random copolymers, block copolymers, graft copolymers, atactic polymers, isotactic polymers, syndiotactic polymers, linear polymers, or branched polymers. When mixtures of polymers are used, the mixture may be homogeneous or it may include two or more polymeric phases.

Examples of classes of suitable substantially water-insoluble thermoplastic organic polymers include the thermoplastic polyolefins, poly(halo-substituted olefins), polyesters, polyamides, polyurethanes, polyureas, poly(vinyl halides), poly(vinylidene halides), polystyrenes, poly(vinyl esters), polycarbonates, polyethers, polysulfides, polyimides, polysilanes, polysiloxanes, polycaprolactones, polyacrylates, and polymethacrylates. Hybrid classes, for example, thermoplastic poly(urethane-ureas), poly(ester-amides), poly(silane-siloxanes), and poly(ether-esters) are within contemplation. Examples of suitable substantially water-insoluble thermoplastic organic polymers include thermoplastic high density polyethylene, low density polyethylene, ultrahigh molecular weight polyethylene, polypropylene (atactic, isotactic, or syndiotactic), poly(vinyl chloride), polytetrafluoroethylene, copolymers of ethylene and acrylic acid, copolymers of ethylene and methacrylic acid, poly(vinylidene chloride), copolymers of vinylidene chloride and vinyl acetate, copolymers of vinylidene chloride and vinyl chloride, copolymers of ethylene and propylene, copolymers of ethylene and butene, poly(vinyl acetate), polystyrene, poly(omega-aminoundecanoic acid) poly(hexamethylene adipamide), poly(epsilon-caprolactam), and poly(methyl methacrylate). These listings are by no means exhaustive, but are intended for purposes of illustration.

Preferred substantially water-insoluble thermoplastic organic polymers include poly(vinyl chloride), copolymers of vinyl chloride, or mixtures thereof; or they include essentially linear ultrahigh molecular weight polyolefin, which is essentially linear ultrahigh molecular weight polyethylene having an intrinsic viscosity of at least 10 deciliters/gram, essentially linear ultrahigh molecular weight polypropylene having an intrinsic viscosity of at least 6 deciliters/gram, or a mixture thereof. Essentially linear ultrahigh molecular weight polyethylene having an intrinsic viscosity of at least 18 deciliters/gram is especially preferred.

As ultrahigh molecular-weight (UHMW) polyolefin is not a thermoset polymer having an infinite molecular weight, it is technically classified as a thermoplastic polymer. However, because the molecules are essentially very long chains, UHMW polyolefin, and especially UHMW polyethylene, softens when heated but does not flow as a molten liquid in a typical thermoplastic manner. The very long chains and the unique properties they provide to UHMW polyolefin are believed to contribute in large measure to the desirable properties of microporous materials made using this polymer.

In some instances, an appliqué described herein includes a microporous material, for example, a microporous polyolefin described herein, on which a full color or black and white image or design is printed. The appliqué is placed onto an elastomeric article, for example, a pneumatic tire or a portion thereof, for example, a sidewall, using either an existing tire or during the production of a new tire. As such, there are two general methods that are used to manufacture tires having printed images or designs expressed on any part of the tires that include the use of a microporous polyolefin described herein. In a first method, a printed image or design is applied to alter an existing tire, and in a second method, a printed image or design is applied to a tire during the production of a new tire.

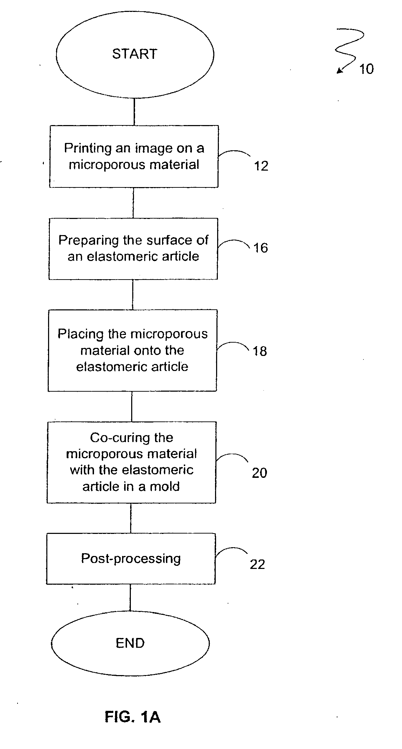

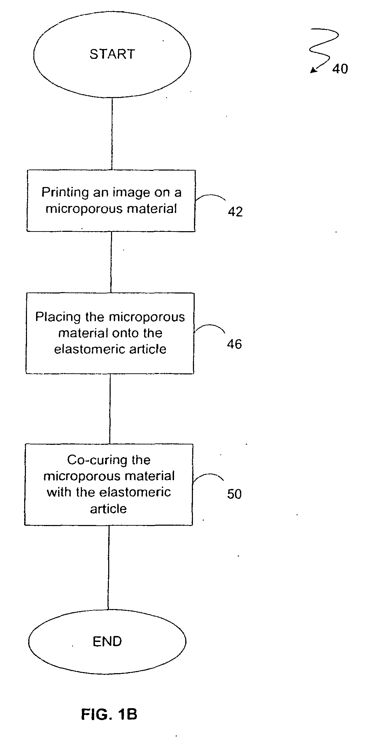

A first method 10 as shown in FIG. 1A, directed to the alteration of premanufactured tires, includes the following steps. The image or design is first applied to one side of the microporous material, for example, microporous polyolefin, as illustrated in step 12. The microporous material can be supplied in sheet form on a roll. In some instances, the microporous material has physical characteristics described in Table 1, such as density, elongation properties and tensile strength to prevent tearing of the material. The physical characteristics of the microporous polyolefin are such that while the material is adhered to a elastomeric article, for example, a pneumatic tire, the visual appearance and physical integrity of the polyolefin remain substantially unchanged during the repeated flexure, elongation and compression experienced by the elastomeric article, for example, pneumatic tire, during the operation of a car on which the elastomeric article, for example, pneumatic tire, is mounted. For example, the percent elongation for pneumatic sidewalls is in the range of approximately 400% to approximately 900%. Measured percent elongation for the various grades of Teslin^{®} (PPG Industries, Pittsburgh, PA) fall in the range of approximately 600% to approximately 1000%. The microporous material is thus capable of substantially retaining its physical integrity and appearance while experiencing elongation as a result of tire flexure. The microporous material is also highly resistant to liquids such as water, alcohols, and organic solvents.

### Teslin Properties Sheet¹

**Table 1 - Properties of Teslin® (PPG Industries, Pittsburgh, PA)**

| | | **SP 700** | **SP 800** | **SP 1000** | **Digital 1000** | **SP 1200** | **SP 1400** | **HD 1400** | **HD 1800** | **Test Method** |
|---|---|---|---|---|---|---|---|---|---|---|
| **Gauge (mils)** | | 7 | 8 | 10 | 10.5 | 12 | 14 | 14 | 18 | D-374 |
| **Density (oz/sq yd)** | | 3.18 | 3.6 | 4.47 | 5.4 | 6.43 | 6.51 | 8.14 | 10.86 | |
| **Density (lbs/sq ft)** | | 0.0219 | 0.0250 | 0.0310 | 0.0375 | 0.0377 | 0.0452 | 0.0565 | 0.0754 | |

| **Tensile Properties** | | | | | | | | | | |
|---|---|---|---|---|---|---|---|---|---|---|
| Tensile Strength (lb/in) | MD | 10.5 | 11.8 | 12 | 19 | 13.3 | 15.3 | 19.8 | 22.1 | D-882 |
| | CD | 5.3 | 6 | 6.2 | 10 | 7.5 | 8.7 | 11.2 | 13.5 | |
| Elmendorf Tear (grams) | | | | | | | | | | |
| | MD | 75 | 90 | 92 | 200 | 102 | 132 | 210 | 358 | D-1922 |
| | CD | tore to MD | tore to MD | tore to MD | tore to MD | tore to MD | tore to MD | tore to MD | tore to MD | |
| % Elongation | | | | | | | | | | |
| | MD | 615 | | 892 | | | 952 | 902 | | |
| | CD | 611 | | 970 | | | 975 | 990 | | |
| Brittleness Temperature | | <-70° C | <-70° C | <-70° C | <-70° C | <-70° C | <-70° C | <-70° C | <-70° C | D-748 |

| **Optical Properties** | | | | | | | | | | |
|---|---|---|---|---|---|---|---|---|---|---|
| Brightness (%) | | 89 | 90 | 91 | 91 | 92 | 92 | 92 | 92 | ISO-2470 |
| Whiteness Index (%) | | 80 | 80 | 80 | 80 | 80 | 80 | 80 | 80 | E-313 |
| Opacity (%) | | 92 | 94 | 96 | 95 | 98 | 98 | 99 | 99 | ISO-2471 |
| Transmission (%) | | 15 | 11 | 8 | 9 | 6 | 5 | 4 | 3 | D-1003 |

| **Sheffield Smoothness** | | | | | | | | | | |
|---|---|---|---|---|---|---|---|---|---|---|
| Top | | 32 | 38 | 42 | 60 | 44 | 49 | 71 | 71 | T-538 |
| Bottom | | 62 | 62 | 64 | 100 | 61 | 67 | 118 | 118 | |

| | | | | | | | | | | |
|---|---|---|---|---|---|---|---|---|---|---|
| ¹Data from PPG | | | | | | | | | | |

Generally on a coating-free, printing ink-free and impregnant-free basis, the microporous material has pores having a volume average diameter of at least 0.02 micrometers, preferably at least 0.04 micrometers, and more preferably at least 0.05 micrometers. On the same basis, the volume average diameter of the pores is also typically less than 0.5 micrometers, preferably less than 0.3 micrometers, and more preferably less than 0.25 micrometers. The volume average diameter of the pores, on this basis, may range between any of these values, inclusive of the recited values. In the course of determining the volume average pore diameter by the above procedure, the maximum pore radius can be determined from a low pressure range scan or from a high pressure range scan. The maximum pore diameter is twice the maximum pore radius.

Coating, printing and impregnation processes can result in filling at least some of the pores of the microporous material. In addition, such processes may also irreversibly compress the microporous material. Accordingly, the parameters with respect to porosity, volume average diameter of the pores, and maximum pore diameter can be determined for the microporous material prior to application of one or more of these processes. In all cases, the porosity of the stretched microporous material is, unless coated, printed or impregnated after stretching, greater than that of the unstretched microporous material. On a coating-free, printing ink-free and impregnant-free basis, pores usually constitute at least 80 percent by volume of the stretched microporous material. In many instances the pores constitute at least 85 percent by volume of the stretched microporous material. Often the pores constitute from more than 80 percent to 95 percent by volume of the stretched microporous material. Preferably, the pores constitute from 85 percent to 95 percent by volume of the stretched microporous material.

The microporous material of the present invention may optionally be coated, impregnated, and/or printed with a wide variety of coating compositions, impregnating compositions, and/or printing inks using a wide variety of coating, impregnating, and/or printing processes, as described herein. The coating compositions, coating processes, impregnating compositions, impregnation processes, printing inks, and printing processes are themselves conventional.

An image or design can be printed on a roll of microporous material using special inks that are designed to withstand temperatures that are generated in molding processes. Several inks can be used with this process, including toner-based inks, UV-cured inks, or solvent-based inks. Preferably, the ink used should be compatible with the mold heat, for example, the ink should withstand the mold heat and not lose adhesion with the polyolefin or be transferred to the mold surface. Preferably, a solvent-based ink is used. When a UV-cured ink is used, methods to minimize damage to the surface of the polyolefin from UV lamps should be employed.

The image or design can be generated by an artist or a photographer and can be processed in a digitized format and printed directly onto the microporous material using any available printing process, for example, offset lithography, flexography, gravure, intaglio, laser printing, electrophotography, digital presses, direct thermal transfer, or inkjet, using a full four color or six color printing process. The microporous material entraps the inks within the layers of the material to prevent or minimize the removal or abrasion of the printed image or design from the microporous material.

The image or design can be coated with a clear laminate such as, for example, an Aquajet laminate produced by Lumina Coatings Canada, to provide protection from UV exposure and pollutants. When a laminate is used, the ink used to print the image or design preferably has a neutral pH for compatibility with the laminate. The laminate may be applied at any point after the ink has dried, and cures within about 24 hours after application. In some instances, the solvent ink is flashed from the surface of the polyolefin after printing to allow proper curing of the laminate. The laminate is tested for adhesion, cure, and abrasion resistance in conjunction with the microporous polyolefin material, UV-cured inks, and solvent based inks. Post-cure, the laminate is essentially inseparable from the surface of the microporous polyolefin material and is highly scuff and abrasion resistant. The image or design can be coated with a laminate either before application of the image or design to the elastomeric article, and/or can be coated in post-processing step 22, as described herein.

In certain embodiments, alternate inks are used in conjunction with alternate methods for adhering the polyolefin to the tire, such as with or without heat. One such method includes cold vulcanization, in which a compatible adhesive is used to attach the polyolefin to the elastomeric material. Cold vulcanization uses a permanent adhesive that is bondable to both the microporous polyolefin material and the elastomeric article, for example, tire, and is flexible enough after curing to remain intact and viable during the typical tire flexure that occurs normally while a vehicle is driven. In another method, ultrasonic adhesion processes, for example, ultrasonic welding, is used to attach the polyolefin materials to the tire.

The image or design is then cut, for example, die cut, to any designated size and in any designated shape to conform to the elastomeric article to which it will be applied. Preferably, the image or design is cut in the shape of a ring to conform to a portion of the sidewall of the tire to which it will be applied. The material may be cut to an individual tire's specification or it may be cut as part of an automated assembly process during the production of the tire.

The method 10 further includes preparing the surface of the elastomeric tire, for example, tire, per step 16. For instance, a portion of the sidewall of a premanufactured tire can be prepared by lightly buffing the surface. In some instances, a thin veneer of unvulcanized, non-staining sidewall compound is laid onto the buffed portion of the sidewall either by hand or machine. The veneer may range in width from approximately 1.25 millimeters to approximately 3 millimeters. The buffing process can be accomplished using a wire brush wheel or an 80-grit carbide rasp, for example, to remove the shiny glaze on the tire sidewall.

The microporous polyolefin is placed, per step 18, on the prepared surface of the elastomeric article. For example, the microporous polyolefin can be placed on the veneer of the non-staining sidewall compound, and the veneer and microporous polyolefin co-cured in a mold per step 20, preferably at temperatures between approximately 135 °C and approximately 160 °C, at pressures between approximately 50 psi and 75 psi, and for a time duration which varies according to the properties of the unvulcanized sidewall compound, which are known to one of skill in the art. The typical time duration is in the order of between approximately 10 to 15 minutes.

The method 10 includes a step 22 of post-processing, in which a laminate is applied to the image or design, as described herein. The desired lifetime of a tire is at least 3 years or a mileage that is equivalent to the original mileage warrantied for the unmodified tire (whichever comes first). The microporous polyolefin material and laminate should remain substantially intact for this length of time, and be able to withstand repeated tire flexing and long-term UV and pollutant exposure. A highly elastic, abrasion resistant, UV inhibiting material is therefore a laminate that is suited for this application.

In some instances, the method may include the use of a thin layer of adhesive material to help adhere the materials during the production process. In the alternative, the material may be placed on a portion of the tires interior or exterior. Further, the microporous material may be molded with the rubber over an existing feature of the mold such as lettering or other geometries to express color and image or design as part of these features such as, for example, a raised Firestone with flames going through it. In another alternative, the microporous material may also be die cut to unusual geometries such as a swoosh or figurine that can be placed on the tire and incorporated into the molded item.

In another embodiment, which is not part of the invention, a "non-printed" microporous polyolefin material is placed onto an uncured portion of a cured tire and co-cured with the tire. The uncured portion of the tire may be, without limitation, the tread shoulder or tread portion of the tire.

In a second method 40, printed images or designs are applied to an elastomeric article, for example, a pneumatic tire, during production of a new elastomeric article, for example, tire. This method includes step 42 of printing an image or design on a microporous material described herein, using a printing process described herein. The image or design can also be coated with a clear laminate as described herein.

The method 40 includes the application of a veneer of anti-staining sidewall compound, ranging in width from approximately 1.25 millimeters to approximately 3 millimeters, with the printed microporous polyolefin material to the sidewall plate of the tire mold per step 46. In some instances, the pneumatic tire sidewalls contain anti- ozonates to protect the tires during outdoor usage. The most commonly used and best- performing anti-ozonates migrate to the surface of the sidewall and provide surface protection. The anti-ozonates, if present on the surface of the sidewall, can migrate to the surface of the polyolefin, experience a chromatic reaction upon exposure to sunlight and typically turn a brownish color. Thus, in some instances, a modified, anti-staining sidewall compound that does not contain anti-ozonates is used. In other instances, an anti-staining sidewall compound that contains anti-ozonates is used.

The veneer of anti-staining sidewall compound and the printed microporous polyolefin are applied to the sidewall plate of the tire mold and co-cured with a green tire per step 50. Alternatively, the veneer of anti-staining sidewall compound and the printed microporous polyolefin are applied directly to a green tire and co-cured. In both cases, the co-curing is typical performed at a temperature of approximately 135 °C to approximately 160 °C, at a pressure of approximately 50 psi to approximately 200 psi, and for approximately 20 minutes to approximately 30 minutes.

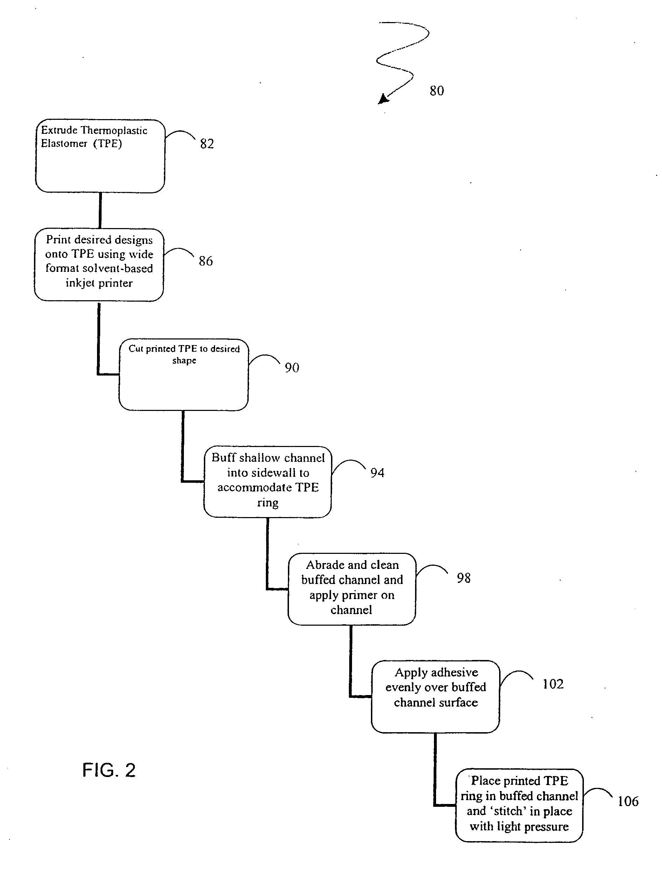

In some instances, an appliqué described herein includes a thermoplastic organic polymer, for example, a thermoplastic elastomer (TPE), for example, a thermoplastic polyurethane (TPU), onto a portion of which a full color or black and white image or design is printed. The TPU may be extruded into a thin film without detracting from the viability of the image or design. The thin film may then be placed directly onto a portion of a sidewall or into a continuous or discontinuous conduit in the sidewall, for example, a continuous or discontinuous groove or a channel, which is buffed or premolded into the desired area of a sidewall, the finished appearance being a continuous smooth sidewall surface. An exemplary method is depicted in FIG. 2.

The use of a thermoplastic elastomer, for example, a TPU, which is printed upon using one of a variety of printing methods, allows an unlimited variety of images or designs to be expressed on tire sidewalls. Additionally, the use of a printable TPU that is adhered to the existing sidewall using an adhesive does not require the use of heat and pressure in a mold. The adhesive used to bond the TPU to the sidewall may act as a barrier to prevent migration and staining of anti-ozonants. Further, a printable TPU is inherently resistant to ozone exposure and does not require the addition of anti-ozonants to maintain its physical properties when exposed to ozone for significant periods of time. In addition, TPU acts to some degree as an anti-migration agent to prevent the migration of anti-ozonants from the sidewall to the surface of the image or design, which would result in staining and discoloration of the image or design.

Preferably, the material used as the printed substrate is a thermoplastic elastomer, e.g., an aliphatic or aromatic, ether-based TPU or hydrolytically stabilized ester-based TPU. TPUs are generally known for having a high level of abrasion resistance, flexibility, chemical resistance, and freedom from plasticizers. The general term polyurethane or urethane is used as a description for any starting polyol, possessing (OH) hydroxyl groups, that are then linked together in a chain type reaction through an isocyanate that polymerizes the polyols. The nature of the polyol molecule is difunctional possessing OH groups on both sides of the molecule that react with the isocyanate that is also difunctionalized and thus called a diisocyanate. Another component used in the reaction is a chain extender to complete the polymerization. The chain extender reacts with the isocyanate and affects the final properties of the polymer. The polyol is characterized as the soft segment, and the isocyanate is characterized as the hard segment. The chain extender affects the relationship between the soft segment and the hard segment. Sometimes a catalyst can be used to affect the overall rate of the reaction. As a general rule, the main classifications that are used for the monomer are the ether type or the ester type, both of which can be used in the methods and products described herein.

Ester-based TPUs can be more expensive than ether-based TPUs, but have improved physical properties such as tensile strength and abrasion resistance. They also have significantly reduced resistance to hydrolysis when compared to ether-based TPUs.

The diisocyanate used to react with polyol is also generally classified into one of two categories based on the chemical structure of the compound, both of which can be used in the methods described herein. The more common diisocyanate used is based on an aromatic compound and thus forms aromatic linkages throughout the urethane chemistry. The most common diisocyanates used for creating aromatic based polyurethanes are (61.3 % industry usage) methylene diphenyl diisocyanate (MDI), 34.1 % toluene diisocyanate (TDI).

The second diisocyanate is of the aliphatic type and does not possess the aromatic hydrocarbon ring, but instead hexamethylene diisocyanate (HDI). HDI is a straight chain isocyanate. The lack of a bulky aromatic backbone allows the polymer chains to twist and crystallize more randomly, giving the polymer a much higher elongation rate at similar hardness levels, as well as an increased level of "rebound" compared to an aromatic diisocyanate. Additionally, HDI-based TPUs maintain color stability in the presence of UV exposure. HDI-based TPUs, however, are more costly than aromatic TPUs.

Preferably, the TPU is abrasion resistant, water resistant, and highly elastic. Preferably, the TPU is ether-based for water resistance and aliphatic for excellent elastic properties. Additionally, an aliphatic TPU is inherently resistant to color change when exposed to ultraviolet radiation.

Additional properties of TPUs include their intrinsic resistance to ozone cracking, which is a known weakness of rubber elastomers; printability using standard, solvent-based printing methods such as inkjet; ability to be extruded to a wide variety of widths and thicknesses, specifically the ability to be extruded as a thin film that may be placed either directly onto a tire sidewall or into a shallow channel in the tire sidewall without altering the physical properties of the sidewall; and ability to be compounded with a whitening agent, such as titanium dioxide, as part of the extrusion process to produce a solid white film.

TPUs have superior physical properties that allow them to adapt readily to the flexing-induced stresses experienced at the surface of a tire sidewall. The properties for an ether-based, aliphatic TPU, specifically Dureflex® A4700 TPU (Deerfield Urethane, Inc., South Deerfield, MA), are shown in Table 2.

**Table 2: Properties of Dureflex® A4700 TPU (Deerfield Urethane, Inc., South Deerfield, MA)**

| Typical Property * | ASTM Method | Units | A4100 | A4700 |
|---|---|---|---|---|
| Polymer Type | | | Aliphatic Ether | Aliphatic Ether |
| Appearance | | | Clear | Clear |
| Hardness (Shore A) | D.2240 | | 78 | 78 |
| Specific Gravity | D-792 | | 1.08 | 1.08 |
| 100% Modules (MD/GD Avg.) | Mod. D-882 | Psi | 500 | 500 |
| 300% Modulus (MD/CD Avg.) | Mod. D-882 | Psi | 1500 | 1500 |
| Ultimate Tensile | Mod. D-882 | Psi | 5500 | 5500 |
| Ultimate Elongation | Mod. D-882 | % | 500 | 500 |
| Tear Resistance | D-1004 | Lb./in | 250 | 250 |
| Yield | | SF/LB at 1 Mil | 180 | 180 |
| Self Priming | | | No | Yes |
| Haze | Hazegard D-1003-61 | % | Below 1.0 | Below 1.0 |
| Film Finish Available | | | Matte/Emboss | Matte/Emboss |

The TPU is usually supplied as pellets. One such TPU that can be used in the methods described herein, for example, is Dureflex® A4700 (Deerfield Urethane, Inc., South Deerfield, MA). Other exemplary TPUs are Elastollan® (BASF Corp., Florham Park, NJ); Dureflex® X2138F Deerfield Urethane, Inc., South Deerfield, MA); Pellethane® (The Dow Chemical Co., Midland, MI); Estane® (Noveon, Inc., Cleveland, OH); Desmopan® and Texin® (Bayer Material Science AG, Leverkusen, Germany); Pearlthane® (Merquinsa, Seabrook, NH); Irocoat® and Irogran® (Huntsman Corp., Derry, NH); and Poly bd® 2035 TPU (Sartomer Company, Inc., Exton, PA).

To prepare a film, the TPU pellets are extruded into a thin film per step 82 using known methods, preferably at least as wide as the desired tires to be modified and with a thickness preferably in the range of about 200 microns to about 400 microns, but possibly as thin as 75 microns. For example, the thermoplastic pellets can be loaded into a material hopper and gravity fed into an extrusion machine barrel. Inside the barrel, heat is applied (generally in the range of about 170 °C to about 210 °C), which turns the pellets into a homogenous melt. At the end of the barrel, the melted material enters a "coat-hanger" die, which forms the exiting material into a flat sheet. The flat sheet is then fed through rollers that control the gauge of the film as well as the finish (matte or glossy). TPU films having matte or glossy finishes can be used in the methods described herein. In some instances, the pellets are compounded with a small percentage, for example, less than 10%, of a whitening agent, for example, titanium dioxide.

The film is then printed upon as described herein per step 86. In some instances, after the ink is allowed to dry, a clear protective coating is applied. For example, a UV-inhibiting coating is applied to the image or design to provide UV protection as well as abrasion resistance and protection of the image or design from environmental contaminants and water. Exemplary UV-inhibiting coatings include the Aquajet® series of aqueous-based coatings (Lumina Coatings International Inc., Alberta, Canada), the Tedlar® series of films (Dupont, Wilmington, Delaware), and ClearShield® (Clearstar Coatings Corp., Isle of Palms, SC).

In other instances, an ozone protective coating is applied. An exemplary ozone protective coating is NeoRez R-967 (DSM NeoResins, Inc., Wilmington, MA). In yet other instances, a protective coating that provides both UV and ozone protection is applied. Exemplary coatings include Poseidon Aqueous coatings (Quaker Color, Quakertown, PA).

The printed and coated image or design is then cut to a specified size and shape per step 90 using a die-cutting system, for example, a steel-ruled die, or a digital cutting system with the printer itself, such as the Roland VersaCAMM® series printers (Roland DGA Corp., Irvine, CA). An example of a typical shape would be a "ring" that would be designed to fit onto a specified portion of a tire sidewall, covering the entire circumference of the sidewall and most of the area between the tread shoulder and the tire bead.

To modify a tire, in some instances, the sidewall of a specific tire is first buffed per step 94, for example, with an encapsulated wire brush, to create a continuous or discontinuous conduit, for example, a continuous or discontinuous groove or a channel, to accommodate the thickness of the printed TPU film. The depth of the conduit can be approximately 25 microns deeper than the thickness of the film to also accommodate the adhesive that will be applied to the tire. In some instances, the depth of the conduit is not uniform, for example, the channel is deepest at the edges and is tapered towards the center such that there is little or no sidewall material removed from the center of the conduit. In other instances, a conduit is not formed, but the sidewall is prepared by minor sanding, buffing and/or cleaning to remove the mold release film at the surface as well as other surface contaminants.

The modified sidewall can be prepared for application of an adhesive by abrading and cleaning the surface per step 98, followed in some cases by the application of a primer to improve adhesion. An adhesive is then applied evenly to the surface of the sidewall or sidewall conduit per step 102. Examples of suitable adhesives include those formed from or based on urethane, cyanoacrylate, epoxy, polyvinyl alcohol, acrylate, methacrylate, polyvinyl chloride, polyester and the like. Thermoplastic elastomers and rubber retread cements can also be employed as the adhesive. An example of a preferred adhesive/primer combination is the Loctite® 401 cyanoacrylate in combination with the Loctite® 770 primer (Henkel Corporation, Rocky Hill, CT). The printed TPU film is then placed onto the sidewall or into the sidewall channel that has been prepared with the adhesive/primer and 'stitched' into place using any number of methods for applying moderate pressure to the film per step 106. For example, this can be done using a hand roller; using a weighted, highly flexible material across the entire surface of the sidewall at one time, which is accomplished by using an appropriately sized inner tube filled with water and placing it on top of the image or design after the image or design is adhered to the sidewall; and by using a side plate, which is a metal piece used in the retread process that has been designed to perfectly fit the contour of a particular size of tire (the plate is placed on top of the image or design and moderate weight is then added to the plate to create pressure to aid in adhesion). The TPU film is kept in place until the adhesive has cured. For example, when a cyanoacrylate is used as the adhesive, over 50% of final cured strength is often achieved within several minutes.

### EXAMPLES

### Example 1 - TPU withstands cracking from ozone exposure

Four TPU samples, sized 25.4 millimeters x 152.4 millimeters, were prepared using a 6.35 millimeter thick sidewall plaque, Loctite® 401 adhesive (Henkel Corporation, Rocky Hill, CT), and Dureflex® A4700 TPU (Deerfield Urethane, Inc., South Deerfield, MA). The samples were placed in a chamber where they were held in a flexed position and subjected to an ozone concentration of 50 pphm. After 3 days, no cracking was visible in the TPU. Similar samples were prepared and tested under the same conditions using Poly bd® 2035 TPU (Sartomer Company, Inc., Exton, PA), which contained a polybutadiene component. Widespread cracking of the Poly bd® 2035 TPU was observed after less than 24 hours of ozone exposure. The cracking was caused by the presence of polybutadiene, which is known to be vulnerable to ozone exposure. TPU without the polybutadiene did not appear to be susceptible to ozone-related cracking.

TPUs containing polybutadiene are used with ozone protective and/or UV protective coatings to reduce cracking from ozone exposure.

### Example 2 - TPU treated with UV-inhibiting coating withstands UV exposure

To test the robustness of the Lumina UV coating, several printed TPU samples were coated with Aquajet 2K coating (Lumina Coatings International Inc., Alberta, Canada), and placed in a UV chamber. Several printed samples were left uncoated and also placed in the chamber to act as controls. After 3 days, the colors on the uncoated control prints were noticeably yellowed and discolored. The coated prints were not visibly changed in either brightness or color after 7 days exposure, which simulates approximately 7-10 years of outdoor exposure.

In view of the wide variety of embodiments to which the principles of the present invention can be applied, it should be understood that the illustrated embodiments are exemplary only, and should not be taken as limiting the scope of the present invention. For example, the steps of the flow diagrams may be taken in sequences other than those described, and more or fewer elements may be used in the diagrams. While various steps of the methods of the different embodiments can be described as being implemented in software, other embodiments in hardware of firmware implementations may alternatively be used, and vice-versa.

It will be apparent to those of ordinary skill in the art that methods described herein may be embodied in a computer program product that includes a computer usable medium. For example, such a computer usable medium can include a readable memory device, such as, a hard drive device, a CD-ROM, a DVD-ROM, or a computer diskette, having computer readable program code segments stored thereon. The computer readable medium can also include a communications or transmission medium, such as, a bus or a communications link, either optical, wired, or wireless having program code segments carried thereon as digital or analog data signals.

Other aspects, modifications, and embodiments are within the scope of the following claims.

## Claims

1. A method of adding a design to a cured pneumatic tire, comprising:
providing a cured pneumatic tire;
providing an appliqué comprising (i) a thermoplastic organic polymer film selected from the group consisting of a microporous polyolefin and a thermoplastic polyurethane; and (ii) a design printed on the film;
placing an adhesive on one of at least a portion of a sidewall of the cured tire, at least a portion of the appliqué, or at least a portion of both the sidewall of the cured tire and the appliqué; and
permanently affixing the appliqué to at least a portion of the sidewall of the cured tire.

2. The method of claim 1, wherein the film has a thickness in the range of about 50 microns and about 500 microns.

3. The method of claim 1, wherein the thermoplastic organic polymer is a thermoplastic polyurethane.

4. The method of claim 3, wherein the thermoplastic polyurethane is an aliphatic or aromatic thermoplastic polyurethane.

5. The method of claim 1, wherein the appliqué further comprises an adhesive layer on one surface.

6. The method of claim 1, wherein the portion of the tire comprises a conduit in the tire.

7. The method of claim 1, wherein the method further comprises applying a layer of a protective coating to the appliqué.

8. The method of claim 7, wherein the protective coating is a UV-inhibiting coating.

9. The method of claim 1, wherein the printed design is generated by an artist or a photographer, and wherein the design is printed on at least a portion of the film using one of offset lithography, flexography, gravure, intaglio, laser printing, electrophotography, digital presses, direct thermal transfer, and inkjet.

## Patentansprüche

1. Verfahren zum Hinzufügen eines Designs zu einem vulkanisierten Luftreifen, wobei das Verfahren folgendes umfasst:
das Bereitstellen eines vulkanisierten Luftreifens;
das Bereitstellen einer Applikation, die folgendes umfasst: (i) einen thermoplastischen organischen Polymerfilm, der aus der Gruppe ausgewählt wird, die ein mikroporöses Polyolefin und ein thermoplastisches Polyurethan umfasst; und (ii) ein auf den Film gedrucktes Design;
das Platzieren eines Klebstoffs auf mindestens einem Teilstück einer Seitenwand des vulkanisierten Reifens, mindestens einem Teilstück der Applikation oder mindestens einem Teilstück sowohl der Seitenwand des vulkanisierten Reifens und der Applikation; und
das permanente Befestigen der Applikation an mindestens einem Teilstück der Seitenwand des vulkanisierten Reifens.

2. Verfahren nach Anspruch 1, wobei der Film eine Dicke im Bereich von etwa 50 Mikro bis etwa 500 Mikron aufweist.

3. Verfahren nach Anspruch 1, wobei es sich bei dem thermoplastischen organischen Polymer um ein thermoplastisches Polyurethan handelt.

4. Verfahren nach Anspruch 3, wobei es sich bei dem thermoplastischen Polyurethan um ein aliphatisches oder aromatisches thermoplastisches Polyurethan handelt.

5. Verfahren nach Anspruch 1, wobei die Applikation ferner eine Klebstoffschicht auf einer Oberfläche umfasst.

6. Verfahren nach Anspruch 1, wobei das Teilstück des Reifens einen Schlauch in dem Reifen umfasst.

7. Verfahren nach Anspruch 1, wobei das Verfahren ferner das Aufbringen einer Schicht eines Schutzüberzugs auf die Applikation umfasst.

8. Verfahren nach Anspruch 7, wobei es sich bei dem Schutzüberzug um einen Überzug mit UV-Schutz handelt.

9. Verfahren nach Anspruch 1, wobei das gedruckte Design durch einen Künstler oder einen Fotografen erzeugt wird, und wobei das Design auf mindestens ein Teilstück der Folie unter Verwendung einer der folgenden Methoden gedruckt wird: Offset-Lithographie, Flexografie, Gravüredruck, Tiefdruck, Laserdruck, Elektrofotografie, Digitaldruck, Thermotransferdirektdruck und Tintenstrahldruck.

## Revendications

1. Procédé d'ajout d'un motif à un pneumatique vulcanisé, comprenant les étapes consistant à :
fournir un pneumatique vulcanisé ;
fournir un appliqué comprenant (i) un film polymère organique thermoplastique choisi dans le groupe constitué d'une polyoléfine microporeuse et d'un polyuréthane thermoplastique ; et (ii) un motif imprimé sur le film ;
placer un adhésif sur l'une d'au moins une partie d'un flanc du pneumatique vulcanisé, d'au moins une partie de l'appliqué ou d'au moins une partie du flanc du pneumatique vulcanisé et de l'appliqué ; et
apposer de manière permanente l'appliqué sur au moins une partie du flanc du pneumatique vulcanisé.

2. Procédé selon la revendication 1, dans lequel le film a une épaisseur comprise entre environ 50 microns et environ 500 microns.

3. Procédé selon la revendication 1, dans lequel le polymère organique thermoplastique est un polyuréthane thermoplastique.

4. Procédé selon la revendication 3, dans lequel le polymère organique thermoplastique est un polyuréthane thermoplastique aliphatique ou aromatique.

5. Procédé selon la revendication 1, dans lequel l'appliqué comprend en outre une couche adhésive sur une surface.

6. Procédé selon la revendication 1, dans lequel la partie du pneumatique comprend un canal dans le pneumatique.

7. Procédé selon la revendication 1, dans lequel le procédé comprend l'étape consistant à appliquer une couche d'un revêtement protecteur sur l'appliqué.

8. Procédé selon la revendication 7, dans lequel le revêtement protecteur est un revêtement anti-UV.

9. Procédé selon la revendication 1, dans lequel le motif imprimé est généré par un artiste ou un photographe, et dans lequel le motif est imprimé sur au moins une partie du film en utilisant l'un des procédés suivants : lithographie offset, flexographie, gravure, héliogravure, impression laser, électrophotographie, presses numériques, transfert thermique direct et jet d'encre.
